(19) Europäisches Patentamt

European Patent Office

Office européen des brevets

(11) **EP 1 048 926 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(51) Int Cl.⁷: **G01B 13/02**, G01B 13/12

(21) Anmeldenummer: **99123693.6**

(22) Anmeldetag: **29.11.1999**

(54) **Vorrichtung zur pneumatischen Längenmessung**

Device for measuring length pneumatically

Dispositif de mesure pneumatique de longueur

(84) Benannte Vertragsstaaten:
**AT BE CH CY DE DK ES FI FR GB GR IE IT LI LU MC NL PT SE**

(30) Priorität: **28.04.1999 DE 29907567 U**

(43) Veröffentlichungstag der Anmeldung:
**02.11.2000 Patentblatt 2000/44**

(73) Patentinhaber: **STOTZ FEINMESSTECHNIK GmbH**
**D-70839 Gerlingen (DE)**

(72) Erfinder: **Stamenkovic, Milan**
**70839 Gerlingen (DE)**

(74) Vertreter: **Thul, Stephan**
**Manitz, Finsterwald & Partner GbR**
**Postfach 31 02 20**
**80102 München (DE)**

(56) Entgegenhaltungen:
| | |
|---|---|
| **CH-A- 364 904** | **DE-A- 2 921 989** |
| **DE-A- 4 344 264** | **DE-A- 19 733 984** |
| **US-A- 4 854 156** | |

EP 1 048 926 B1

**Beschreibung**

Die vorliegende Erfindung betrifft eine Vorrichtung zur pneumatischen Längenmessung mit einer Vordüse und einer Meßdüse, durch welche das zum Messen verwendete Medium auf eine Prallplatte geleitet wird, einem vor der Vordüse angeordneten ersten Drucksensor, einem zwischen Vordüse und Meßdüse angeordneten zweiten Drucksensor, Mitteln zur Bestimmung des Abstandes der Prallplatte von der Meßdüse aus der Änderung des Druckes zwischen Vordüse und Meßdüse unter Berücksichtigung des vom ersten Drucksensor gemessenen Druckes und Mitteln zum Kalibrieren der Vorrichtung in einem vorgesehenen Meßbereich.

Eine solche Vorrichtung ist aus der DE 197 33 984.0 bekannt. Hierin ist im Zusammenhang mit einem pneumatischen Hochdruck-Längenmeßverfahren eine Vorrichtung beschrieben, die anstelle der bekannten Brükkenschaltungen mit nur zwei Düsen arbeitet. Durch die Verwendung eines Drucksensors vor der Vordüse kann auf die beiden weiteren Düsen des Referenzzweiges bei der Brückenschaltung verzichtet werden. Der mit dem Referenzzweig verbundene Luftverbrauch entfällt daher.

Zur Kalibrierung der bekannten Vorrichtung sind in der DE 197 33 984.0 verschiedene Kalibrierformeln genannt. Alle erfordern eine Wertemessung bei zwei unterschiedlichen, festen Längen. Das heißt, es sind zwei Einstellmeister erforderlich, um die Vorrichtung zu kalibrieren und die Meßfunktion zu bestimmen.

Der vorliegenden Erfindung liegt die Aufgabe zugrunde, eine Vorrichtung der eingangs genannten Art anzugeben, die leichter kalibrierbar ist.

Diese Aufgabe wird dadurch gelöst, daß die Kalibriermittel so eingerichtet sind, daß sie eine Kalibrierfunktion verwenden, die unter der Annahme der Konstantheit der Ausflußzahl der Vordüse und der Ausflußzahl der Meßdüse aufgestellt ist.

Durch die Verwendung einer solchen Kalibrierfunktion ist die Kalibrierung vereinfacht. Besonders bevorzugt ist dabei die Verwendung einer Kalibrierfunktion, die zusätzlich unter der Annahme konstanter Durchmesser der Vordüse und der Meßdüse aufgestellt ist. Damit kann eine Kalibrierfunktion mit nur einer Konstanten zur Kalibrierung der Vorrichtung verwendet werden. Da nur eine Konstante bestimmt werden muß, reicht für die Kalibrierung die Messung bei einem fest vorgegebenen Längenwert aus. Das heißt, es wird nur ein Einstellmeister benötigt, um die Kalibrierung durchzuführen. Entsprechend einfach und schnell kann die Kalibrierung bei der erfindungsgemäßen Vorrichtung erfolgen.

Grundsätzlich kann eine derartige Kalibrierfunktion, das heißt, das in der eingangs beschriebenen Vorrichtung angewandte Kalibrierverfahren, bei allen pneumatischen Längenmeßvorrichtungen verwendet werden, also auch bei Längenmeßvorrichtungen, die mit einer Brückenschaltung arbeiten, oder auch bei Niederdrucklängenmeßvorrichtungen. Die Erfindung stützt sich dabei auf die Erkenntnis, daß der Versorgungsdruck und die Temperatur beim Einsatz dieser Vorrichtungen im wesentlichen konstant sind und daher auch die Ausflußzahlen und Durchmesser von Vor- und Meßdüse, so daß eine unter diesen Annahmen aufgestellte und dementsprechend einfache Kalibrierfunktion brauchbare Ergebnisse liefert.

Nach einer Ausgestaltung der Erfindung ist die Vorrichtung auf Hochdruckmeßverfahren, also Versorgungsdrücke größer als 2 bar, insbesondere ca. 3 bar ausgelegt. Dabei hat es sich als geeignet herausgestellt, wenn die Kalibriermittel als Kalibrierfunktion die Funktion:

$$x = C \frac{p_1}{p_2} \sqrt{\left(\frac{p_2}{p_1}\right)^{\frac{2}{\kappa}} - \left(\frac{p_2}{p_1}\right)^{\frac{\kappa+1}{\kappa}}}$$

verwenden, wobei $\kappa$ die adiabatische Konstante des für die Messung verwendeten Mediums und C eine Konstante ist. Die Konstante C kann mit lediglich einem Einstellmeister der Länge $X_2$ leicht nach folgender Formel ermittelt werden:

$$C = X_2 \frac{P_2}{P_1 \sqrt{\left(\frac{P_2}{P_1}\right)^{1,42857} - \left(\frac{P_2}{P_1}\right)^{1,71429}}}$$

wobei $P_1$ der Betrag des Versorgungsdruckes $p_1$ beim Kalibrieren und $P_2$ der mit dem eingesetzten Einstellmeister $X_2$ gemessene Druck $p_2$ ist. Wie sich gezeigt hat, können mit dieser Kalibrierfunktion sehr geringe Abweichungen über den gesamten Meßbereich erreicht werden. Der kalibrierte Meßbereich kann dabei gegenüber Vorrichtungen, deren Kalibriermittel mit bekannten Kalibrierfunktionen arbeiten, sogar vergrößert werden. Außerdem können vorteilhafterweise Meßdüsen mit unterschiedlichen Durchmessern verwendet werden, da die Empfindlichkeit automatisch mitkalibriert wird.

Nach einer weiteren Ausgestaltung der Erfindung können die Kalibriermittel als Kalibrierfunktion die Funktion:

$$x = \sqrt{\frac{\frac{p_1}{p_2} - 1}{B}}$$

verwenden, wobei B eine Konstante ist. Dies ist eine verhältnismäßig einfache Kalibrierfunktion, die die nichtlineare Beziehung zwischen $p_2$ und $p_1$ nutzt. Die Konstante B läßt sich mit einem einzigen Einstellmeister $X_2$ wie folgt ermitteln:

$$B = \frac{1}{X_2^2}\left(\frac{P_1}{P_2} - 1\right)$$

wobei $P_1$ wieder der Betrag des Versorgungsdruckes $p_1$ beim Kalibrieren und $P_2$ wieder der mit dem eingesetzten Einstellmeister $X_2$ gemessene Druck $p_2$ ist. Auch diese Ausgestaltung hat den Vorteil eines großen kalibrierbaren Meßbereiches. Außerdem gilt auch hier, daß Meßdüsen mit unterschiedlichen Durchmessern verwendet werden können, da die Empfindlichkeit automatisch mitkalibriert wird.

Ein Ausführungsbeispiel der Erfindung ist in der Zeichnung dargestellt und wird nachfolgend beschrieben. Es zeigen, jeweils in schematischer Darstellung,

Fig. 1 eine erfindungsgemäße Meßvorrichtung und

Fig. 2 eine Darstellung des sich aus der Kalibrierung ergebenden Fehlers.

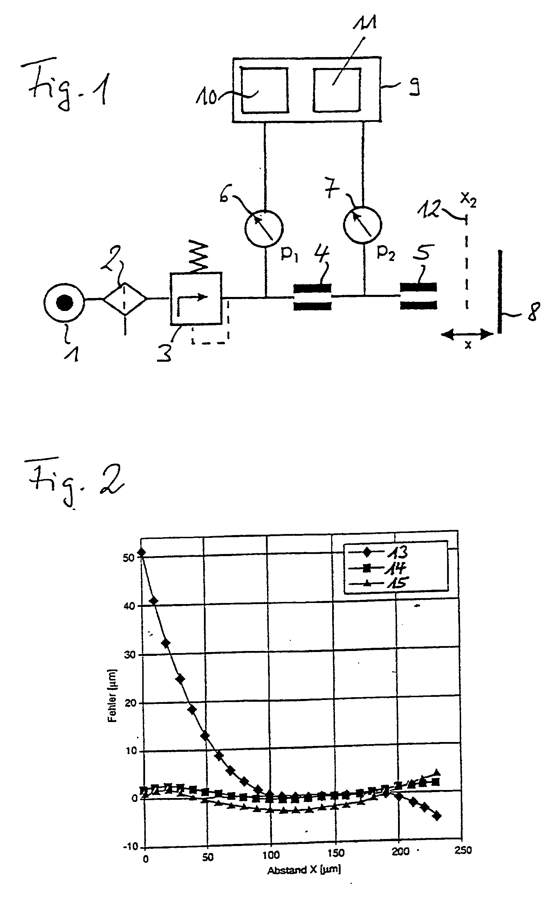

Die in Fig. 1 gezeigte Meßvorrichtung umfaßt eine Druckquelle 1, ein Filter 2, einen Druckregler 3, eine Vordüse 4, eine Meßdüse 5, einen vor der Vordüse 4 angeordneten ersten Drucksensor 6 und einen zwischen Vordüse 4 und Meßdüse 5 angeordneten zweiten Drucksensor 7. Vor der Luftaustrittsöffnung der Meßdüse 5 ist eine Prallplatte 8 stellvertretend für ein zu messendes Werkstück gezeigt.

Die beiden Drucksensoren 6 und 7 stehen mit einer Auswerteeinheit 9 in Verbindung, die Mittel 10 zur Bestimmung des Abstandes der Prallplatte 8 von der Meßdüse 5 und Mittel 11 zum Kalibrieren der Vorrichtung umfaßt. Diese Mittel 10 und 11 sind hier nur sehr schematisch als Block dargestellt. Zwischen der Prallplatte 8 und der Meßdüse 5 ist außerdem mit unterbrochener Linie 12 ein Abstand $X_2$ eingezeichnet, der dem Abstand entspricht, der durch den zur Kalibrierung verwendeten Einstellmeister bestimmt wird.

Über die Druckquelle 1 und den Druckregler 3 wird die dargestellte Vorrichtung mit einem im wesentlichen konstanten Luftdruck beaufschlagt, der durch die Drucksensoren 6 und 7 vor der Vordüse 4 und vor der Meßdüse 5 gemessen wird. In Abhängigkeit vom Abstand der Prallplatte 8 von der Meßdüse 5 ändert sich der Druckabfall an der Meßdüse 5 und damit der vor der Meßdüse 5 durch den Drucksensor 7 gemessene Druckwert $p_2$. Der so erhaltene Rohmeßwert $p_2$ wird durch den vor der Vordüse 4 durch den ersten Drucksensor 6 gemessenen Druckwert pi korrigiert, so daß Schwankungen im Versorgungsluftdruck ausgeglichen werden. Beispielsweise kann die Korrektur nach der Formel:

$$f(p_1, p_2) = \alpha\, p_1 - p_2$$

erfolgen, wobei $\alpha$ eine grundsätzlich frei wählbare Konstante ist. Noch genauere Korrekturfunktionen sind in der DE 197 33 984.0 beschrieben. Damit wird eine gut und genau arbeitende pneumatische Längenmessung ohne Referenzzweig ermöglicht.

Zur Kalibrierung der Vorrichtung wird eine Längenmessung unter Verwendung eines Einstellmeisters durchgeführt, der eine fest bestimmte Länge $X_2$ vorgibt. Die Kalibrierung basiert dabei auf folgender Gleichung für den Abstand x:

$$x = \frac{D_{Z1}^2}{4 D_{Z2}}\frac{\alpha_1 p_1}{\alpha_2 p_2}\sqrt{\left(\frac{p_2}{p_1}\right)^{\frac{2}{\kappa}} - \left(\frac{p_2}{p_1}\right)^{\frac{\kappa+1}{\kappa}}}$$

Darin ist $\kappa$ die adiabatische Konstante, also 1,4 im Falle von Luft, $D_{Z1}$ der Durchmesser der Vordüse 4, $D_{Z2}$ der Durchmesser der Meßdüse 5, $\alpha_1$ die Ausflußzahl der Vordüse 4 und $\alpha_2$ die Ausflußzahl der Meßdüse 5. Nimmt man konstante Temperatur an, so werden die Düsendurchmesser $D_{Z1}$ und $D_{Z2}$ zu Konstanten. Ebenso werden die Ausflußzahlen $\alpha_1$ und $\alpha_2$ bei konstantem Versorgungsdruck $p_1$ konstant. Unter dieser Annahme läßt sich die vorstehende Gleichung vereinfachen zu:

$$x = C\frac{p_1}{p_2}\sqrt{\left(\frac{P_2}{P_1}\right)^{1,42857} - \left(\frac{P_2}{P_1}\right)^{1,71429}}$$

wenn die adiabatische Konstante von Luft eingesetzt wird. Die Konstante C kann nun unter Verwendung des Einstellmeisters mit der festen Länge $X_2$ ermittelt werden:

$$C = X_2 \frac{P_2}{P_1\sqrt{\left(\frac{P_2}{P_1}\right)^{1,42857} - \left(\frac{P_2}{P_1}\right)^{1,71429}}}$$

wobei $P_1$ der Betrag des Versorgungsdruckes $p_1$ beim Kalibrieren und $P_2$ der mit dem eingesetzten Einstellmeister mit der festen Länge $X_2$ gemessene Druck $p_2$ ist.

Alternativ kann als Kalibriergleichung die folgende nichtlineare Beziehung zwischen $p_1$ und $p_2$ benutzt werden:

$$p_2 = \frac{p_1}{1 + B\, x^2}$$

Die Konstante B läßt sich mit dem gleichen Einstellmeister der Länge $X_2$ nach folgender Formel er-

mitteln:

$$B = \frac{1}{X_2^2}\left(\frac{P_1}{P_2} - 1\right)$$

wobei $P_1$ und $P_2$ dieselbe Bedeutung haben wie zuvor. Somit ergibt sich für den Abstand x:

$$x = \sqrt{\frac{\dfrac{p_1}{p_2} - 1}{B}}.$$

Da nur ein Einstellmeister verwendet werden muß, können die Kalibrierungen schnell und einfach durchgeführt werden. Dennoch ist der durch die Kalibrierung bedingte Fehler nicht größer als bei Verwendung von zwei Einstellmeistern und linearer Kalibrierung. Dies ist in Fig. 2 dargestellt.

Hierin zeigt Kurve 13 den Fehler bei linearer Kalibrierung mit zwei Einstellmeistern bei einer Brückenschaltung nach der Formel:

$$x(\delta) = E \cdot \delta + B,$$

wobei $\delta = p_2 - p_3$ die Druckdifferenz zwischen den beiden Zweigen der Brückenschaltung sowie E und B Konstanten bedeuten.

Kurve 14 zeigt den Fehler bei Verwendung der ersten Kalibriergleichung der vorliegenden Erfindung und Kurve 15 den Fehler bei der zweiten Kalibriergleichung der vorliegenden Erfindung.

Man erkennt, daß der Fehler bei Verwendung der erfindungsgemäßen Kalibriergleichungen über den gesamten Meßbereich, das heißt von Null bis ca. 230 μm, sehr gering und insbesondere im Bereich der linearen Kalibrierung zwischen 100 μm und 180 μm nicht größer ist als bei dieser. Mit der erfindungsgemäßen Kalibrierung kann also ein deutlich größerer Meßbereich erzielt werden.

Die Erfindung basiert dabei auf dem Grundgedanken, die unbekannten Parameter in der Gleichung für den zu messenden Abstand zwischen der Prallplatte und der Meßdüse wie Durchmesser und Ausflußzahl von Meßdüse und Vordüse als konstant anzusehen und den Wert der Konstanten durch einen Einstellmeister zu bestimmen. Werden alle unbekannten Parameter durch eine einzige Konstante ersetzt, so reicht eine Messung mit einem Einstellmeister aus, um die Konstante zu bestimmen.

Dieses Verfahren kann grundsätzlich auch bei Hochdruckmeßverfahren mit Brückenschaltung und bei Niederdruckmeßverfahren eingesetzt werden.

**Bezugszeichenliste**

1   Druckquelle
2   Luftfilter
3   Druckregler
4   Vordüse
5   Meßdüse
6   erster Drucksensor
7   zweiter Drucksensor
8   Prallplatte
9   Auswerteeinheit
10   Abstandsbestimmungsmittel
11   Kalibriermittel
12   Abstand des Einstellmeisters
13   Kurve der linearen Kalibrierung
14   Kurve der ersten nichtlinearen Kalibrierung
15   Kurve der zweiten nichtlinearen Kalibrierung

**Patentansprüche**

1.   Vorrichtung zur pneumatischen Längenmessung, mit einer Vordüse (4) und einer Meßdüse (5), durch welche das zum Messen verwendete Medium auf eine Prallplatte (8) geleitet wird, einem vor der Vordüse (4) angeordneten ersten Drucksensor (6), einem zwischen Vordüse (4) und Meßdüse (5) angeordneten zweiten Drucksensor (7), Mitteln (10) zur Bestimmung des Abstandes der Prallplatte (8) von der Meßdüse (5) aus der Änderung des Druckes ($p_2$) zwischen Vordüse (4) und Meßdüse (5) unter Berücksichtigung des vom ersten Drucksensor (6) gemessenen Druckes (pi) und Mitteln (11) zum Kalibrieren der Vorrichtung in einem vorgesehenen Meßbereich, **dadurch gekennzeichnet, daß** die Kalibriermittel (11) so eingerichtet sind, daß sie eine Kalibrierfunktion verwenden, die unter der Annahme der Konstantheit der Ausflußzahl ($\alpha_1$) der Vordüse (4) und der Ausflußzahl ($\alpha_2$) der Meßdüse (5) aufgestellt ist.

2.   Vorrichtung nach Anspruch 1, **dadurch gekennzeichnet, daß** die Kalibrierfunktion zusätzlich unter der Annahme der Konstantheit des Durchmessers ($D_{Z1}$) der Vordüse (4) und des Durchmessers ($D_{Z2}$) der Meßdüse (5) aufgestellt ist.

3.   Vorrichtung nach Anspruch 1 oder 2, **dadurch gekennzeichnet, daß** die Vorrichtung auf Hochdruckmeßverfahren, also Versorgungsdrücke größer 2 bar, insbesondere ca. 3 bar, ausgelegt ist.

4.   Vorrichtung nach Anspruch 3, **dadurch gekennzeichnet, daß** die Kalibrierfunktion die Funktion:

$$x = C\frac{p_1}{p_2}\sqrt{\left(\frac{p_2}{p_1}\right)^{\frac{2}{\kappa}} - \left(\frac{p_2}{p_1}\right)^{\frac{\kappa+1}{\kappa}}}$$

ist, wobei κ die adiabatische Konstante des zur Messung verwendeten Mediums und C eine Konstante ist.

5. Vorrichtung nach Anspruch 3, **dadurch gekennzeichnet, daß** die Kalibrierfunktion die Funktion:

$$x = \sqrt{\dfrac{\dfrac{p_1}{p_2} - 1}{B}}$$

ist, wobei B eine Konstante ist.

**Claims**

1. An apparatus for pneumatic length measurement, having a pre-nozzle (4) and a measuring nozzle (5) through which the medium to be measured is guided onto an impact plate (8), a first pressure sensor (6) arranged in front of the pre-nozzle (4), a second pressure sensor (7) arranged between the pre-nozzle (4) and the measuring nozzle (5), means (10) for the determination of the spacing of the impact plate (8) from the measuring nozzle (5) from the change of the pressure ($p_2$) between the pre-nozzle (4) and the measuring nozzle (5) while taking into account the pressure ($p_1$) measured by the first pressure sensor (6) and means (11) for the calibration of the apparatus in a provided measurement range, **characterized in that** the calibration means (11) are contrived such that they use a calibration function which is established on the assumption the outflow number ($\alpha_1$) of the pre-nozzle (4) and the outflow number ($\alpha_2$) of the measuring nozzle (5) are constant.

2. An apparatus in accordance with claim 1, **characterized in that** the calibration function is additionally established on the assumption the diameter ($D_{Z1}$) of the pre-nozzle and the diameter ($D_{Z2}$) of the measuring nozzle (5) are constant.

3. An apparatus in accordance with claim 1 or claim 2, **characterized in that** the apparatus is designed for high pressure measuring methods, that is for supply pressures larger than 2 bar, in particular approximately 3 bar.

4. An apparatus in accordance with claim 3, **characterized in that** the calibration function is the function:

$$x = C\frac{p_1}{p_2}\sqrt{\left(\frac{p_2}{p_1}\right)^{\frac{2}{\kappa}} - \left(\frac{p_2}{p_1}\right)^{\frac{\kappa+1}{\kappa}}}$$

where κ is the adiabatic constant of the medium used for the measurement and C is a constant.

5. An apparatus in accordance with claim 3, **characterized in that** the calibration function is the function:

$$x = \sqrt{\dfrac{\dfrac{p_1}{p_2} - 1}{B}}$$

where B is a constant.

**Revendications**

1. Dispositif de mesure pneumatique de longueur, avec une tuyère amont (4) et une tuyère de mesure (5), par laquelle le fluide utilisé pour la mesure est conduit sur une cible (8), un premier capteur de pression (6) étant disposé avant la tuyère amont (4), un deuxième capteur de pression (7) étant disposé entre la tuyère amont (4) et la tuyère de mesure (5), avec des moyens (10) pour déterminer la distance de la cible (8) à la tuyère de mesure (5) à partir de la variation de la pression ($p_2$) entre la tuyère amont (4) et la tuyère de mesure (5) en tenant compte de la pression ($p_1$) mesurée par le premier capteur de pression (6) et avec des moyens (11) pour calibrer le dispositif dans une plage de mesure prévue, **caractérisé en ce que** les moyens de calibrage (11) sont conçus de telle sorte qu'ils utilisent une fonction de calibrage qui est établie sur l'hypothèse de constance de l'indice d'écoulement ($\alpha_1$) de la tuyère amont (4) et de l'indice d'écoulement ($\alpha_2$) de la tuyère de mesure (5).

2. Dispositif selon la revendication 1, **caractérisé en ce que** la fonction de calibrage est établie sur l'hypothèse de constance du diamètre ($D_{Z1}$) de la tuyère amont (4) et du diamètre ($D_{Z2}$) de la tuyère de mesure (5).

3. Dispositif selon la revendication 1 ou 2, **caractérisé en ce que** le dispositif est conçu pour un procédé de mesure à haute pression, c'est-à-dire pour des pressions d'alimentation supérieures à 2 bars, notamment de 3 bars environ.

4. Dispositif selon la revendication 3, **caractérisé en ce que** la fonction de calibrage est la fonction :

$$x = C \, \frac{p_1}{p_2} \, \sqrt{\left(\frac{p_2}{p_1}\right)^{\frac{2}{\kappa}} - \left(\frac{p_2}{p_1}\right)^{\frac{\kappa+1}{\kappa}}}$$

$\kappa$ étant la constante adiabatique du fluide utilisé pour la mesure et C étant une constante.

5. Dispositif selon la revendication 3, **caractérisé en ce que** la fonction de calibrage est la fonction :

$$x = \sqrt{\frac{\frac{p_1}{p_2} - 1}{B}}$$

B étant une constante.

Fig. 1

Fig. 2